(19) **Europäisches Patentamt**

**European Patent Office**

**Office européen des brevets**

(11) **EP 0 868 402 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int. Cl.$^7$: **C01B 33/158**, C01G 19/02, C01G 23/047, C01G 25/02, C01G 37/02, C01B 13/32

(21) Anmeldenummer: **96934488.6**

(22) Anmeldetag: **30.09.1996**

(86) Internationale Anmeldenummer:
**PCT/EP96/04250**

(87) Internationale Veröffentlichungsnummer:
**WO 97/13721 (17.04.1997 Gazette 1997/17)**

(54) **VERFAHREN ZUR UNTERKRITISCHEN HERSTELLUNG VON ANORGANISCHEN AEROGELEN**

METHOD OF PRODUCING INORGANIC AEROGELS UNDER SUBCRITICAL CONDITIONS

PROCEDE DE PRODUCTION D'AEROGELS INORGANIQUES DANS DES CONDITIONS SOUS-CRITIQUES

(84) Benannte Vertragsstaaten:
**DE SE**

(30) Priorität: **14.10.1995 DE 19538333**

(43) Veröffentlichungstag der Anmeldung:
**07.10.1998 Patentblatt 1998/41**

(73) Patentinhaber:
**BASF AKTIENGESELLSCHAFT**
**67056 Ludwigshafen (DE)**

(72) Erfinder:
• **ZIEGLER, Bernd**
 **70806 Kornwestheim (DE)**
• **GERBER, Thomas**
 **D-18055 Rostock (DE)**

(56) Entgegenhaltungen:
| | |
|---|---|
| **EP-A- 0 199 930** | **EP-A- 0 255 000** |
| **WO-A-93/13024** | **WO-A-94/25149** |
| **WO-A-95/06617** | **WO-A-95/17347** |
| **WO-A-96/22942** | **DE-A- 4 316 540** |

**Beschreibung**

Die vorliegende Erfindung betrifft ein neues Verfahren zur Herstellung von anorganischen Aerogelgranulaten auf der Basis von Oxiden der Metalle Magnesium, Aluminium, Silicium, Zinn, Lanthan, Titan, Zirconium, Chrom und/oder Thorium durch Erzeugen eines Hydrogelgranulats über einen Sol/Gel-Prozeß, Ersetzen des im Hydrogelgranulat enthaltenen Wassers durch ein organisches Lösungsmittel und Trocknen des lösungsmittelfeuchten Gelgranulats.

Aerogele sind hochporöse Materialien, die im allgemeinen aus Metalloxiden bestehen und in der Regel eine Porosität > 0,85 (d.h., z.B. für $SiO_2$ eine niedrige Dichte bevorzugt im Bereich von 0,07 bis 0,3 $g/cm^3$) und eine sehr hohe innere Oberfläche (bei $SiO_2$ in der Regel von 700 bis 1200 $m^2/g$) besitzen. Durch diese Eigenschaften eignen sich die Aerogele hervorragend als Wärme- und Schalldämmstoff und als Katalysatorträger.

Die geringe Dichte und hohe innere Oberfläche wird dadurch erreicht, daß das Feststoffgerüst (Metalloxid) des Hydrogels beim Trocknen erhalten bleibt. Das Feststoffgerüst im Hydrogel ist durch Aggregationsprozesse entstanden, die die entsprechenden Eigenschaften (Dichte, Oberfläche) bedingen. Im allgemeinen wird das Feststoffgerüst durch fraktale Cluster beschrieben. Die Aggregationscluster (Feststoffgerüst, Metalloxid) des Hydrogels werden beim "einfachen" Trocknen (Erhitzen des unbehandelten Hydrogels bei unterkritischen Bedingungen) aufgrund der wirkenden Kapillarkräfte und der ablaufenden Kondensation der inneren Oberfläche ($2M_{surface}$-OH $\rightarrow M_{bulk}$-O-$M_{bulk}$ + $H_2O$) zerstört. Es entsteht ein Xerogel, dessen innere Oberfläche z.B. im Fall von $SiO_2$ im Bereich von 25-700 $m^2/g$ und dessen Dichte im Bereich über 1,0 $g/cm^3$ liegt.

Zur Herstellung von anorganischen Aerogelen gibt es nach dem Stand der Technik zwei grundlegend verschiedene Wege.

Zum einen werden überkritische Trocknungsverfahren angewandt. Hierdurch wird die Wirkung der Kapillarkräfte verhindert, da der Phasenübergang flüssig/gasförmig durch ein entsprechendes Temperatur-Druck-Regime umgangen wird. Bei der Trocknung wird von lösungsmittelhaltigen Gelen ausgegangen, die durch Austausch des ursprünglichen Lösungsmittels, meist Wasser, erhalten werden. Als Lösungsmittel werden hierbei Alkohole (Methanol, Ethanol, Propanol) oder flüssiges Kohlendioxid verwendet (Phys. Chem. 36, 52-64 (1932); EP-A-171 722; DE-A-18 11 353; US-A-3 672 833; DE-A-39 24 244; WO-A-95/06617). Durch die Verwendung von Autoklaven sind die Verfahren sehr kostenaufwendig.

Andererseits existieren nach dem Stand der Technik auch Verfahren, die eine unterkritische Trocknung von Aerogelen erlauben.

Kernpunkt des Verfahrens nach WO-A-95/25149 ist eine Vergrößerung des Kontaktwinkels zwischen Lösungsmittel und Feststoffgerüst. Hierdurch wird der Kapillardruck verringert, und die Struktur des feuchten Gels bleibt bei der Trocknung nahezu erhalten. Die Veränderung des Kontaktwinkels wird über eine Modifikation der inneren Oberfläche des Feststoffgerüstes im feuchten Gel durch Reaktion mit einer Verbindung der Formel $R_xMX_y$, in der M das Metall des Feststoffoxides, R eine organische Gruppe und X ein Halogen bedeutet, erreicht. Die unterkritische Trocknung des zusätzlich einem mehrfachen Lösungsmittelaustausch unterzogenen Gels wird sehr langsam stufenweise vorgenommen und macht das beschriebene Verfahren zusammen mit dem etwa 4 Tage dauernden Modifizierungsschritt sehr zeitaufwendig.

Im Verfahren nach der WO-A-94/26406 wird ein $SiO_2$-Aerogel nach Oberflächenmodifikation mit Trimethylchlorsilan und mehrfachem Lösungsmittelaustausch mit Hilfe eines dielektrischen Trocknungsverfahrens hergestellt (Mikrowellentrocknung, Hochfrequenztrocknung) . Eine dielektrische Trocknung ist jedoch sehr energie- und apparateaufwendig und muß genau auf das jeweilige Gel abgestimmt werden.

Aus den EP-A-199 930 und 255 000 sind feinteilige Aerogelprodukte (Aerogelpulver) bekannt, die durch Trocknung eines Alkogels bzw. eines Hydrogels hergestellt werden.

Der vorliegenden Erfindung liegt die Aufgabe zugrunde, anorganische Aerogelgranulate, insbesondere $SiO_2$-Aerogelgranulate, in einem gegenüber dem Stand der Technik verkürzten Verfahren mit geringerem verfahrenstechnischen Aufwand und damit kostengünstig herzustellen.

Demgemäß wurde ein Verfahren zur Herstellung von anorganischen Aerogelgranulaten auf der Basis von Oxiden der Metalle Magnesium, Aluminium, Silicium, Zinn, Lanthan, Titan, Zirconium, Chrom und/oder Thorium durch Erzeugen eines Hydrogelgranulats über einen Sol/Gel-Prozeß, Ersetzen des im Hydrogelgranulat enthaltenen Wassers durch ein organisches Lösungsmittel und Trocknen des lösungsmittelfeuchten Gelgranulats gefunden, welches dadurch gekennzeichnet ist, daß man den Trocknungsschritt so vornimmt, daß man das lösungsmittelfeuchte Gelgranulat bei einem Druck, der unter dem überkritischen Druck des Lösungsmittels liegt, derart einer Umgebungstemperatur, die über der Siedetemperatur des Lösungsmittels liegt, aussetzt, daß das Lösungsmittel im Gelgranulat in wenigen Sekunden aufgeheizt wird und verdampft.

Da bei dem erfindungsgemäßen Verfahren Granulate mit Aerogeleigenschaften (hohe Porosität, niedrige Dichte, hohe innere Oberfläche) erhalten werden, die nicht mit den durch "einfache" unterkritische Trocknung erhaltenen Xerogelen vergleichbar sind, wird für die erfindungsgemäßen Materialien die Bezeichnung Aerogel verwendet, obwohl sie nicht wie die üblicherweise als Aerogele bezeichneten Materialien durch überkritische Trocknung hergestellt werden.

Bei der erfindungsgemäßen unterkritischen Trocknung wird die Umgebungstemperatur (Trocknungstemperatur) bevorzugt so gewählt, daß die Temperatur im lösungsmittelfeuchten Gelgranulat aufgrund des Phasenübergangs flüssig → gasförmig des Lösungsmittels unter der Pyrolysetemperatur des Lösungsmittels liegt.

Die Umgebungstemperatur kann über oder unter der kritischen Temperatur des Lösungsmittels liegen, ist vorzugsweise jedoch viel höher als die Siedetemperatur des Lösungsmittels bei dem entsprechenden Druck, so daß ein sehr schnelles Aufheizen des Lösungsmittels im Gel erfolgt. Der Umgebungsdruck ist stets kleiner als der kritische Druck. Bevorzugt wird bei Normaldruck getrocknet, man kann aber auch bei leichtem Unterdruck trocknen.

Geeignete Umgebungstemperaturen betragen im allgemeinen 150 bis 300°C, bevorzugt 200 bis 300°C und besonders bevorzugt 250 bis 300°C, d.h., die Umgebungstemperaturen liegen in der Regel 130 bis 330°C, insbesondere 150 bis 300°C und vor allem 200 bis 250°C oberhalb der Siedetemperatur des Lösungsmittels.

Bei dem erfindungsgemäßen Trocknungsschritt ist es wesentlich, daß das möglichst wasserfreie Lösungsmittel sehr schnell (in wenigen Sekunden) bei möglichst hohen Temperaturen aus dem Gelgranulat entfernt wird. Es war nicht zu erwarten, daß das Feststoffgerüst des Gels bei dieser schnellen Trocknung weitgehend erhalten bleibt und nicht kollabiert und eine Kondensation der $Si_{surface}$-OH-Gruppen an der inneren Oberfläche des Gelgranulats weitgehend unterbleibt, da nach den Verfahren des Standes der Technik stets sehr vorsichtig und langsam bei niedrigen Temperaturen getrocknet wird, wobei zudem vor der Trocknung eine Modifizierung der Geloberfläche vorgenommen wird.

Im folgenden sollen die einzelnen Schritte des erfindungsgemäßen Verfahrens zur Herstellung von Metalloxid-Aerogelgranulaten näher beschrieben werden, wobei vor allem auf die Herstellung von $SiO_2$-Aerogelgranulaten eingegangen werden soll, für die das erfindungsgemäße Verfahren besondere Bedeutung hat.

Zunächst wird durch einen üblichen Sol/Gel-Prozeß ein Hydrogelgranulat erzeugt, das im wesentlichen keine ionischen Bestandteile enthält. Dabei kann man so vorgehen, daß man die wäßrige Lösung eines hydrolysierbaren Salzes des Metalls, bei dem das Metall als Metallat vorliegt, zunächst mit Hilfe eines sauren Ionenaustauschers von Fremdmetallkationen befreit und dann durch geeignete pH-Wert-Führung zum Hydrogelgranulat umsetzt. Man kann aber auch zunächst das Hydrogelgranulat erzeugen und dieses durch Waschen mit elektrolytfreiem Wasser von Fremdionen befreien.

Zur Erleichterung und Beschleunigung des Trocknungsprozesses ist es vorteilhaft, daß das Lösungsmittel enthaltende Gel in Form eines bevorzugt kugelförmigen Granulats vorliegt, welches ein schnelles Inkontaktbringen des Gels mit einer auf die gewünschte Trocknungstemperatur erhitzten Oberfläche (z.B. das Abrollen des Granulats auf einer heißen Platte oder das Erhitzen in einem vorgeheizten Tiegel in einem ebenfalls vorgeheizten Ofen) erlaubt, wobei man zur Vermeidung der Entzündung der Lösungsmitteldämpfe unter Schutzgas arbeiten kann. Es empfiehlt sich daher, das Hydrogel durch Versprühen des Sols direkt in Form von Kugeln herzustellen oder den gebildeten Gelkörper nachträglich mechanisch zu zerkleinern.

$SiO_2$-Hydrogelgranulate kann man erfindungsgemäß z.B. herstellen, indem man eine Wasserglaslösung, insbesondere eine Natriumwasserglaslösung, die in der Regel 0,5 bis 6,5, bevorzugt 0,8 bis 3,5 mol $SiO_2$/l enthält, durch einen sauren Ionenaustauscher laufen läßt (Ersatz der Natriumionen durch Protonen) und anschließend durch Zugabe einer Base wie Ammoniakwasser einen pH-Wert von in der Regel 3 bis 6,5, vorzugsweise 5,5 bis 5,9, einstellt. Durch Versprühen der Lösung in eine wasserunlösliche Flüssigkeit, die eine höhere Dichte als das Sol hat, z.B. Paraffinöl, können direkt Sol-Kügelchen von etwa 1 bis 15 mm, insbesondere etwa 3 mm Durchmesser erzeugt werden, die während des Herabsinkens zu Hydrogel-Kügelchen gelieren. Ohne Versprühen wird in wenigen Minuten ein kompakter Gelkörper erhalten.

Man kann $SiO_2$-Hydrogelgranulate jedoch auch wie in der WO-A-95/06617 beschrieben durch Vermischen einer Wasserglaslösung mit einer Säure wie Schwefelsäure unter Einstellung eines pH-Wertes von in der Regel 7,5 bis 11, bevorzugt 8,5 bis 9,5, erhalten. Wird hierfür eine Mischdüse verwendet, kann das Sol direkt versprüht werden und erstarrt während der Flugphase in der Luft zu Hydrogeltropfen, welche anschließend mit Wasser salzfrei gewaschen werden können.

Zur Verstärkung des Feststoffgerüsts im Gelgranulat und damit seiner Stabilisierung für den Lösungsmittelaustausch und die Trocknung kann es zweckmäßig sein, das Hydrogelgranulat einem Umlösungsprozeß im Sinne einer Ostwaldreifung zu unterziehen.

Hierfür muß das Gelgranulat eine genügend hohe Löslichkeit im umgebenden flüssigen Medium haben, was für eine Reifung von $SiO_2$-Hydrogelgranulat in Wasser durch geeignete Wahl von pH-Wert und Temperatur erreicht werden kann. Die Reifung kann durch alleiniges Tempern (Altern) oder durch Tempern in Gegenwart einer niedermolekularen Spezies des Feststoffes, die eine höhere spezifische Oberfläche als das Feststoffgerüst hat, erfolgen.

Bei der Reifung von $SiO_2$-Hydrogelgranulat kann man so vorgehen, daß man eine wäßrige Suspension des Gelgranulats in Gegenwart von niedermolekularer Polykieselsäure bei einem pH-Wert von im allgemeinen 7 bis 11,5, bevorzugt 9,5 bis 10, der durch Zugabe einer Base wie Ammoniakwasser eingestellt und beibehalten wird, auf üblicherweise 50 bis 95°C erhitzt und etwa 0,1 bis 3 h bei dieser Temperatur hält. Da die Löslichkeit der $SiO_2$-Partikel von ihrem Radius abhängt, kommt es so zu einem Umlösungsprozeß. Die Polykieselsäure kann der Suspension dabei kontinuierlich zugegeben werden, man kann das Gelgranulat aber auch direkt in einer wäßrigen Polykieselsäurelösung suspendieren.

Ein "reines" Tempern kann so vorgenommen werden, daß man eine wäßrige Suspension des Hydrogelgranulats bei einem pH-Wert von $\leq 6$, bevorzugt 5 bis 6, etwa 0,5 bis 5 h, vorzugsweise etwa 1 h, ebenfalls im geschlossenen Gefäß auf 50 bis 95°C erhitzt.

Der nächste Schritt bei dem erfindungsgemäßen Verfahren zur Aerogelgranulatherstellung besteht darin, das im Hydrogelgranulat enthaltene Wasser möglichst weitgehend durch ein organisches Lösungsmittel zu ersetzen. Der Restwassergehalt im lösungsmittelfeuchten Gelgranulat sollte anschließend bevorzugt < 0,2, besonders bevorzugt < 0,1 und ganz besonders bevorzugt < 0,01 Vol.-% betragen.

Geeignet sind hierfür Lösungsmittel, die wasserlöslich sind und/oder mit Wasser ein Azeotrop bilden und daher ein Verdrängen des Wassers durch Spülen des Hydrogelgranulats mit dem Lösungsmittel in einer Durchflußapparatur oder durch azeotrope Destillation erlauben.

Bevorzugte Lösungsmittel sind $C_1$-$C_6$-Alkohole wie Methanol, Ethanol, Propanol, Isopropanol, Butanol, Isobutanol, Pentanol und Hexanol, aliphatische $C_1$-$C_6$-Carbonsäure-$C_1$-$C_8$-alkylester, vor allem $C_2$-$C_3$-Carbonsäure-$C_1$-$C_3$-alkylester wie Essigsäuremethyl-, -ethyl- und -propylester und Propionsäuremethyl-, -ethyl- und -propylester, Toluol, Aceton, Chloroform und deren Mischungen.

Beispiele für geeignete Azeotrope sind binäre Azeotrope wie Gemische von Butanol, Isobutanol, Pentanol, Hexanol, Essigsäureethylester oder Toluol mit Wasser und ternäre Azeotrope wie Gemische von Wasser mit Ethanol und Toluol, Isopropanol und Toluol oder Aceton und Chloroform.

Selbstverständlich ist darauf zu achten, daß das Hydrogelgranulat in so viel organischem Lösungsmittel erhitzt wird, daß das gesamte Wasser abdestilliert werden kann. Dies kann bei Verwendung von geringeren Mengen von mit Wasser nicht mischbaren Lösungsmitteln auch durch Rückführung des Lösungsmittels erreicht werden.

Für den erfindungsgemäßen unterkritischen Trocknungsschritt ist es zweckmäßig, wenn das Gelgranulat ein niedrigsiedendes Lösungsmittel (Siedepunkt in der Regel $\leq 100$°C, bevorzugt $\leq 70$°C, besonders bevorzugt $\leq 60$°C) mit hohem Dampfdruck enthält, wobei Lösungsmittel niedriger Oberflächenspannung (insbesondere $\leq 30$ dyn/cm) besonders bevorzugt sind, da sie sowohl eine schnelle als auch das Feststoffgerüst am wenigsten belastende Trocknung ermöglichen.

Beispiele für derartige Lösungsmittel sind $C_1$-$C_3$-Alkohole wie Methanol, Ethanol, Propanol und Isopropanol, Diethylether, Aceton, n-Pentan und n-Hexan, wobei Methanol, Aceton und n-Pentan besonders geeignet sind.

Wurde für den Ersatz des Wassers im Hydrogelgranulat ein höhersiedendes Lösungsmittel verwendet, sollte dieses daher vor der Trocknung durch eines der vorstehenden niedrigsiedenden Lösungsmittel ausgetauscht werden, was in einfacher Weise durch Spülen geschehen kann. Bei Verwendung z.B. von Aceton und Chloroform zur Erzeugung eines ternären Azeotrops erübrigt sich selbstverständlich ein weiterer Lösungsmittelaustausch.

Auf diese Weise können $SiO_2$-Aerogelgranulate mit einer Dichte von in der Regel 0,2 bis 0,3 g/cm$^3$ vorteilhaft hergestellt werden.

Sollen Aerogelgranulate mit Dichten < 0,2 g/cm$^3$ erzeugt werden, so ist eine Modifizierung der inneren Oberfläche des nach dem Wasseraustausch erhaltenen lösungsmittelfeuchten Gelgranulats erforderlich, welche eine Kondensation der $Si_{surface}$-OH-Gruppen gemäß

$$2\ Si_{surface}\text{-OH} \rightarrow Si_{bulk}\text{-O-}Si_{bulk} + H_2O$$

bei der Trocknung verhindert.

Grundsätzliche Möglichkeiten zur Oberflächenmodifizierung sind in Iler, The Chemistry of Silica, John Wiley & Sons (1979) sowie Journal of Polymer Science, Polymer Chemistry Edition 22, 3759 (1984) beschrieben.

Das Prinzip der Oberflächenmodifizierung ist die Umsetzung der $Si_{surface}$-OH-Gruppen mit einer chemischen Verbindung, die selbst nicht polymerisiert und die oben beschriebene Kondensation der $Si_{surface}$-OH-Gruppen untereinander unterbindet.

Bevorzugt ist hierfür eine Veresterung der Si-OH-Gruppen mit $C_1$-$C_6$-Alkoholen (Bildung von Kieselsäureestern) oder eine Silylierung durch Umsetzung mit Silanen der Formeln $R^1{}_{4-n}Si(OR^2)_n$ oder $R^1{}_{4-n}SiCl_n$, in denen n 1 bis 3 und $R^1$ und $R^2$ unabhängig voneinander $C_1$-$C_6$-Alkyl, Cyclohexyl oder Phenyl bedeuten, mit Hexamethyldisilazan oder Trimethylsilylacetamid.

Man kann auch eine Umsetzung mit Tetrachlorsilan mit anschließendem Austausch der Chloratome durch Reaktion mit Metallorganylen (Metalle: z.B. Lithium, Zink, Aluminium, Magnesium), welche die obengenannten Reste $R^1$ enthalten, oder eine Umsetzung mit Titanverbindungen der Formel $R^1{}_3TiCl$ vornehmen.

Diese Reaktionen sollen anhand der folgenden beispielhaften Reaktionsgleichungen verdeutlicht werden:

$$Si_{surface}\text{-OH} + ROH \rightarrow Si_{surface}\text{-OR} + H_2O$$

$$Si_{surface}\text{-OH} + (CH_3)_2Si(OC_2H_5)2 \rightarrow Si_{surface}\text{-O-Si}(CH_3)_2(OC_2H_5) + C_2H_5OH$$

$$Si_{surface}\text{-OH} + (CH_3)_2SiCl_2 \rightarrow Si_{surface}\text{-O-Si}(CH_3)_2Cl + HCl$$

$$2\,Si_{surface}\text{-OH} + (CH_3)_3SiNHSi(CH_3)_3 \rightarrow 2\,Si_{surface}\text{-O-Si}(CH_3)_3 + NH_3$$

$$Si_{surface}\text{-OH} + (CH_3)_3SiNHCOCH_3 \rightarrow Si_{surface}\text{-O-Si}(CH_3)_3 + H_2NCOCH_3$$

$$Si_{surface}\text{-OH} + SiCl_4 \rightarrow Si_{surface}\text{-O-SiCl3} + HCl \qquad \text{a)}$$

$$Si_{surface}\text{-O-SiCl}_3 + 3\,CH_3Li \rightarrow Si_{surface}\text{-O-Si}(CH_3)_3 + 3\,LiCl \qquad \text{b)}$$

$$Si_{surface}\text{-OH} + (CH_3)_3TiCl \rightarrow Si_{surface}\text{-O-Ti}(CH_3)_3 + HCl$$

Besondere Bedeutung bei der Oberflächenmodifizierung kommt Hexamethyldisilazan, bevorzugt den Silanen wie Dimethyldiethoxysilan, Monomethyltrichlor-, Dimethyldichlor-, Trimethylchorsilan, und besonders bevorzugt den Alkoholen wie Methanol, Ethanol, Propanol, Isopropanol, Butanol, Isobutanol, Pentanol und Hexanol zu, wobei $C_1$-$C_4$-Alkohole besonders hervorzuheben sind.

Die Oberflächenmodifizierung kann man vorteilhaft so vornehmen. daß man nach Entfernung des Wassers das lösungsmittelfeuchte Gelgranulat zusammen mit dem Modifizierungsmittel und freiem Lösungsmittel vorzugsweise auf Rückflußtemperatur erhitzt, wobei das Lösungsmittel selbstverständlich mit dem Modifizierungsmittel mischbar sein sollte. Für die Umsetzung mit Silanen eignen sich als Lösungsmittel z.B. Toluol und Alkohole wie Methanol, Isopropanol und Butanol.

Insbesondere bei der Veresterung mit Alkoholen ist eine zweistufige Prozeßführung empfehlenswert, bei der zunächst das Wasser durch den Alkohol ausgetauscht wird und dann das alkoholhaltige Gelgranulat in freiem Alkohol in Gegenwart einer möglichst wasserfreien Säure wie Toluolsulfonsäure, Chlorwasserstoff oder konzentrierter Schwefelsäure erhitzt wird. Auch die Silylierung kann vorteilhaft in Gegenwart einer Säure vorgenommen werden.

Bei der Veresterung empfiehlt es sich, das gebildete Reaktionswasser durch Spülen mit dem Alkohol oder gegebenenfalls dem zur Trocknung verwendeten Lösungsmittel (z.B. Aceton) zu entfernen. Das Reaktionswasser kann bei Verwendung eines mit Wasser nicht mischbaren, ein Azeotrop bildenden Alkohols auch vorteilhaft während der Reaktion abdestilliert werden, wobei mit Hilfe eines Wasserabscheiders die Vollständigkeit der Reaktion kontrolliert werden kann und der Alkohol wieder zurückgeführt werden kann. Bei Verwendung eines mit Wasser mischbaren Alkohols kann das Wasser mit Hilfe eines "Wasserträgers", z.B. Toluol, entfernt werden.

Bei der anschließenden Trocknung (in der Regel auch einem Lösungsmittelaustausch) ist zunächst ein Schrumpfen der modifizierten Gelgranulatteilchen zu beobachten, die nach vollständiger Verdampfung des Trocknungslösungsmittels in ihre ursprüngliche Form und Größe zurückspringen.

Auf diese Weise gelingt es, durch die Oberflächenmodifizierung SiO$_2$-Aerogelgranulate besonders niedriger Dichte (in der Regel < 0,2 g/cm$^3$, insbesondere < 0,1 g/cm$^3$) herzustellen, die bei Verwendung von Modifizierungsmitteln mit hydrophoben Resten Z (bei den Alkoholen z.B. Isopropoxy und Butoxy) gleichzeitig auch hydrophob sind.

Selbstverständlich können die oben beschriebenen, nichtoberflächenmodifizierten Aerogelgranulate nachträglich z.B. durch Umsetzung mit gasförmigen Organometallhalogeniden, insbesondere $R^1_{4-n}SiCl_n$, bei Unterdruck hydrophobiert werden.

Beispiele

Unterkritische Trocknung ohne Oberflächenmodifizierung

Beispiel 1

120 ml einer Natriumwasserglaslösung mit einer SiO$_2$-Konzentration von 1,7 mol/l wurden zunächst in 500 ml eines sauren Ionenaustauscherharzes (Wofatit® KPS, Chemie AG, Bitterfeld-Wolfen) eingerührt und nach 10 min abdekantiert. Das erhaltene Sol (pH-Wert 2,5) wurde durch Zugabe von konzentrierter wäßriger Ammoniaklösung auf einen pH-Wert von 5,8 eingestellt und unter Bildung von Solkugeln von 3 mm Durchmesser in Paraffinöl gesprüht.

Die durch Gelierung gebildeten Hydrogelkugeln wurden nach Abspülen mit Wasser in 250 ml einer wäßrigen Polykieselsäurelösung mit einer SiO$_2$-Konzentration von 1,7 mol/l nach Einstellen eines pH-Wertes von 9,8 durch Zugabe von konzentrierter wäßriger Ammoniaklösung auf 90°C erhitzt und 10 min bei dieser Temperatur gehalten.

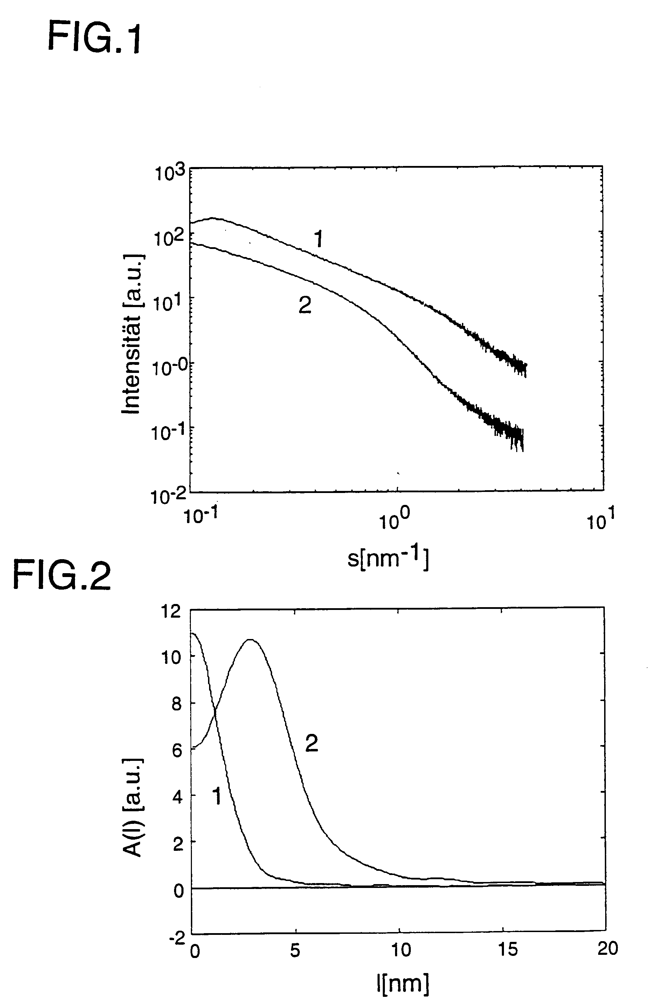

Die bei der SAXS-Messung (Röntgenkleinwinkelstreuung) für das Hydrogel vor (1) und nach (2) der Behandlung mit der Polykieselsäure enthaltenen Kurven (Fig. 1) und die aus diesen Kurven berechneten Sehnenverteilungen (Fig. 2) zeigen deutlich, daß durch die Behandlung mit der Polykieselsäure eine Verstärkung des $SiO_2$-Gerüsts erreicht wurde, die sonst nur durch wochenlange Alterung möglich ist.

Nach dem Abkühlen auf Raumtemperatur wurden die Hydrogelkugeln in ein Gemisch von 400 ml Ethanol und 1000 ml Toluol gegeben und auf eine Temperatur oberhalb der Siedetemperatur des ternären Azeotrops erhitzt. Es wurde solange destilliert, bis die Temperatur auf die Siedetemperatur von Toluol (110,6°C) gestiegen war (4 h).

Anschließend wurden die abgekühlten Gelkugeln zunächst mit Ethanol und dann mit Aceton gespült und danach so über eine 250°C heiße Metallplatte gerollt, daß jede Gelkugel Kontakt mit der Platte hatte, und das Aceton jeweils in ca. 20 sec verdampfte.

Es wurde ein $SiO_2$-Aerogelgranulat mit einer Schüttdichte von etwa 0,3 g/cm$^3$ erhalten.

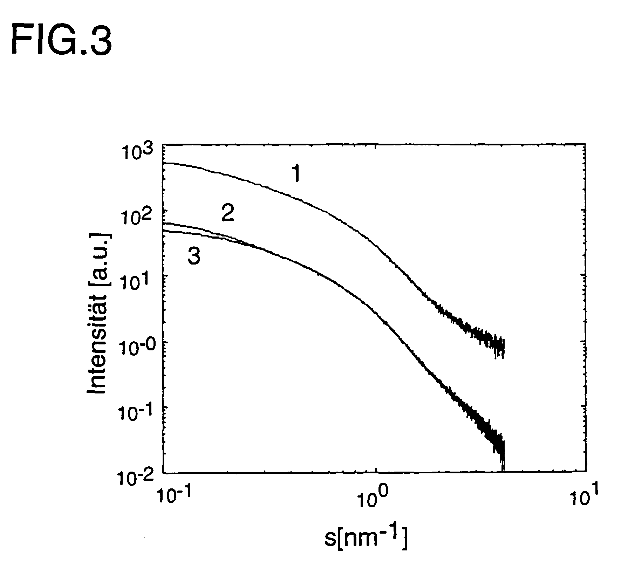

Die SAXS-Messungen (Fig. 3) zeigen, daß die innere Struktur des Hydrogels erhalten geblieben ist und lediglich Poren von > 13 nm Durchmesser zerstört worden sind.

Die Kurve (1) entspricht dabei dem mit der Polykieselsäure behandelten Hydrogel. Die Kurve (3) wurde für das aus diesem Hydrogel hergestellte Aerogel erhalten. Die Kurve (2) entspricht dem gemäß Beispiel 11 vor der Trocknung oberflächenmodifizierten Aerogel.

Beispiel 2

Es wurde analog Beispiel 1 vorgegangen, jedoch wurde eine Wasserglaslösung mit einer $SiO_2$-Konzentration von 3,1 mol/l eingesetzt.

Es wurde ein $SiO_2$-Aerogelgranulat mit einer Schüttdichte von 0,2 g/cm$^3$ erhalten.

Beispiel 3

Eine Mischung von 700 ml abgetropftem $SiO_2$-Hydrogelgranulat mit einem mittleren Partikeldurchmesser von 3 mm, das analog Beispiel 1 der WO-A-95/06617 hergestellt und salzfrei gewaschen wurde (Na$^+$-Gehalt: 0,89 g/l) und 1700 ml n-Butanol wurde in einem 21-Glaskolben auf 100°C, d.h. eine Temperatur oberhalb der Siedetemperatur des azeotropen Gemisches, aber unterhalb der Siedetemperatur von reinem n-Butanol erhitzt. In 12 h konnten so 452 ml Wasser abdestilliert werden.

Nach dem Abkühlen auf Raumtemperatur wurde das im Gelgranulat enthaltene n-Butanol durch Auswaschen gegen n-Pentan ausgetauscht. Das Gelgranulat wurde dann analog Beispiel 1 getrocknet.

Es wurde ein klares, transparentes $SiO_2$-Aerogelgranulat mit einer für Aerogele typischen Rayleigh-Streuung, bedingt hydrophober Reaktion und folgenden Eigenschaften erhalten: Schüttdichte = 0,140 g/cm$^3$; Wärmeleitfähigkeit $\lambda$ (23°C) = 0,022 W/m•K; Transmission (600 nm) = 66 %.

Die in den Beispielen angegebenen Wärmeleitfähigkeiten wurden mit dem Gerät $\lambda$-Control der Fa. Hesta bei 23°C Mitteltemperatur gemessen.

Die Transmissionsmessungen erfolgten an 10 mm dicken Aerogelgranulatschüttungen unter der Meßgeometrie 8°/diffus mit dem Gerät Cary 14 der Fa. Cary bei einer Wellenlänge von 600 nm.

Beispiel 4 bis 8

Es wurde analog Beispiel 3 vorgegangen, jedoch wurde das Wasser nicht durch n-Butanol, sondern durch die in der Tabelle angegebenen Lösungsmittel ersetzt.

| Beispiel | Lösungsmittel für den Wasseraustausch | Schüttdichte des erhaltenen $SiO_2$-Aerogelgranulats |
|---|---|---|
| 4 | Toluol | 0,143 g/cm$^3$ |
| 5 | Essigsäureethylester | 0,152 g/cm$^3$ |
| 6 | Isobutanol | 0,138 g/cm$^3$ |
| 7 | n-Hexanol | 0,206 g/cm$^3$ |
| 8 | n-Pentanol | 0,179 g/cm$^3$ |

Beispiel 9

700 ml abgetropftes und salzfrei gewaschenes $SiO_2$-Hydrogelgranulat (Na$^+$-Gehalt 0,89 g/l, mittlerer Partikeldurchmesser 3 mm), das analog Beispiel 1 der WO-A-95/06617 hergestellt wurde, wurde in einer üblicherweise für die experimentelle Chromatographie eingesetzten 21-Glassäule solange mit Isopropanol gespült, bis am Ablauf der Austauschsäule die Dichte des reinen Alkohols (0,785 g/l) vorlag.

Dann wurde das im Gelgranulat enthaltene Isopropanol durch n-Pentan ausgetauscht (Dichte am Säulenablauf: 0,626 g/l). Das Gelgranulat wurde dann analog Beispiel 1, jedoch bei 180°C getrocknet.

Es wurde ein $SiO_2$-Aerogelgranulat mit einer Schüttdichte von 0,148 g/l, einer Wärmeleitfähigkeit $\lambda$ (23°C) von 0,023 W/m • K und einer Transmission (600 nm) von 66 % erhalten.

Beispiel 10

Analog Beispiel 9 wurden 1,2 l $SiO_2$-Hydrogelgranulat solange mit Methanol gespült, bis die Dichte am Säulenablauf 0,791 g/l betrug.

Danach wurde das methanolhaltige Gelgranulat analog Beispiel 1, jedoch bei 200°C getrocknet.

Es wurde ein $SiO_2$-Aerogelgranulat mit einer Schüttdichte von 0,201 g/cm$^3$, einer Wärmeleitfähigkeit $\lambda$ (23°C) von 0,031 W/m • K und einer Transmission (600 nm) von 66 % erhalten.

Unterkritische Trocknung mit Oberflächenmodifizierung

Beispiel 11

Es wurde analog Beispiel 1 vorgegangen, jedoch wurden nach der azeotropen Destillation 12 g Hexamethyldisilazan in das heiße Toluol gegeben und die Mischung dann langsam (in 1 h) auf Raumtemperatur abgekühlt.

Es wurde ein hydrophobes $SiO_2$-Aerogelgranulat mit einer Schüttdichte von 0,09 g/cm$^3$ erhalten. Die SAXS-Messungen (Kurve 2 in Fig. 3; zum Vergleich: Kurve 1: mit Polykieselsäure behandeltes Hydrogel und Kurve 2: aus diesem Hydrogel ohne Oberflächenmodifizierung erhaltenes Aerogel) zeigen, daß die innere Struktur des Hydrogels auch für Poren von > 13 nm Durchmesser erhalten geblieben ist.

Beispiel 12

Es wurde analog Beispiel 11 vorgegangen, jedoch wurde wie in Beispiel 2 eine Wasserglaslösung mit einer $SiO_2$-Konzentration von 3,1 mol/l eingesetzt.

Es wurde ein hydrophobes $SiO_2$-Aerogelgranulat mit einer Schüttdichte von 0,2 g/cm$^3$ erhalten.

Beispiel 13

700 ml abgetropftes und salzfrei gewaschenes $SiO_2$-Hydrogelgranulat wurden analog Beispiel 10 mit Methanol gespült.

Das methanolhaltige Gel wurde dann in einen 21-Glaskolben mit Tropftrichter und Rückflußkühler überführt. Nach Zugabe von 280 ml Methanol wurden nacheinander 37,3 ml Dimethyldiethoxysilan und 28 ml konzentrierte Schwefelsäure zugegeben. Dann wurde die Reaktionsmischung 3 h auf Rückflußtemperatur erhitzt.

Nach Abkühlen auf Raumtemperatur und erneuter Überführung des Gelgranulats in eine Austauschsäule wurde zur Entfernung der Sulfationen und des Wassers 6,75 h mit 7 l Methanol gewaschen. Dann wurde das Gelgranulat analog Beispiel 1, jedoch bei 200°C getrocknet.

Es wurde ein im Auflicht blauschimmerndes, hydrophobes $SiO_2$-Aerogelgranulat mit einer Schüttdichte von 0,122 g/cm$^3$, einer Wärmeleitfähigkeit $\lambda$ (23°C) von 0,019 W/m • K und einer Transmission (600 nm) von 71 % erhalten.

Beispiel 14

Es wurde analog Beispiel 13 vorgegangen, jedoch wurde anstelle von Methanol Isopropanol eingesetzt.

Es wurde ein hydrophobes $SiO_2$-Aerogelgranulat mit einer Schüttdichte von 0,102 g/cm$^3$ erhalten.

Beispiel 15

Eine Mischung von 700 ml wie in Beispiel 14 erhaltenem, isopropanolhaltigem Gelgranulat und 700 ml Isopropanol wurde nach Zutropfen von 46,6 ml Dimethyldichlorsilan 4 h unter Rückfluß erhitzt.

Nach Abkühlen auf Raumtemperatur und Spülen mit Isopropanol wurde das Isopropanol durch n-Pentan ausgetauscht. Das Gelgranulat wurde dann analog Beispiel 1, jedoch bei 200°C getrocknet.

Es wurde ein klares, hydrophobes $SiO_2$-Aerogelgranulat mit einer Schüttdichte von 0,118 g/cm$^3$, einer Wärmeleitfähigkeit $\lambda$ (23°C) von 0,020 W/m • K und einer Transmission (600 nm) von 65 % erhalten.

Beispiel 16

Eine Mischung von 700 ml abgetropftem $SiO_2$-Hydrogelgranulat, das analog Beispiel 1 der WO-A-95/06617 hergestellt und salzfrei gewaschen wurde (Na$^+$-Gehalt: 0,89 g/l) und 1166 ml n-Butanol wurde in einem 21-Glaskolben auf eine Temperatur oberhalb der Siedetemperatur des azeotropen Gemisches, aber unterhalb der Siedetemperatur von reinem n-Butanol erhitzt. In 3 h wurden so 400 ml Wasser entzogen.

Nach Zugabe von 68 ml Hexamethyldisilazan wurde noch 3 h unter Rückfluß erhitzt. Dann wurde bis zur Dichte des reinen Alkohols (0,81 g/l) entwässert.

Nach Austausch von n-Butanol durch n-Pentan wurde das Gelgranulat analog Beispiel 1, jedoch bei 200°C getrocknet.

Es wurde ein klares, transparentes $SiO_2$-Aerogelgranulat mit einer Schüttdichte von 0,144 g/cm$^3$, einer Wärmeleitfähigkeit $\lambda$ (23°C) von 0,0205 W/m • K und einer Transmission (600 nm) von 69 % erhalten.

Beispiel 17

Ein Gemisch von 10 ml einer Natriumwasserglaslösung mit einer $SiO_2$-Konzentration von 6,3 mol/l und 25 ml Wasser wurde in 100 ml eines sauren Ionenaustauscherharzes (Wofatit KPS, Chemie AG, Bitterfeld-Wolfen) getropft, das mit 30 ml Wasser versetzt wurde. Nach etwa 10 min wurde das Sol (pH-Wert 2,2) abdekantiert und durch Zugabe von konzentrierter wäßriger Ammoniaklösung auf einen pH-Wert von 5,8 eingestellt. Die Gelbildung erfolgte in wenigen min.

Der erhaltene Gelkörper wurde dann in einem geschlossenen Gefäß auf 95°C erhitzt und 1 h bei dieser Temperatur gehalten.

Nach dem Abkühlen wurde der Gelkärper dann in etwa 3 mm x 3 mm große Bruchstücke zerkleinert, die zur azeotropen Entfernung des Wassers in 650 ml n-Butanol erhitzt wurden (4 h).

Dann wurde 5 min lang Chlorwasserstoff in den Destillationskolben eingeleitet. Nach 15stündigem Erhitzen auf eine Temperatur zwischen der Siedetemperatur des Azeotrops n-Butanol/Wasser und der Siedetemperatur des reinen n-Butanols wurde auf Raumtemperatur abgekühlt.

Das Gelgranulat wurde dann mit Aceton gespült und anschließend in einem vorgeheizten Tiegel für 20 sec in einen auf 260°C aufgeheizten Ofen gebracht.

Die Gelteilchen schrumpften dabei stark und wurden weiß. Nach vollständiger Verdampfung des Acetons sprangen sie wieder in ihre ursprüngliche Form und Größe zurück.

Es wurde ein hydrophobes $SiO_2$-Aerogelgranulat mit einer Schüttdichte von 0,09 g/cm$^3$ erhalten, das 4 d auf Wasser schwimmt.

Beispiel 18

Es wurde analog Beispiel 17 vorgegangen, jedoch wurden anstelle von Chlorwasserstoff 6,5 g Toluolsulfonsäure als Katalysator zugegeben.

Es wurde ein hydrophobes $SiO_2$-Aerogelgranulat mit einer Schüttdichte von 0,09 g/cm$^3$ erhalten, das 4 d auf Wasser schwimmt.

Beispiel 19

1 l abgetropftes und salzfrei gewaschenes $SiO_2$-Hydrogelgranulat wurde analog Beispiel 9 mit Isopropanol gespült.

Das isopropanolhaltige Gelgranulat wurde dann in einen Rundkolben mit Rückflußkühler überführt. Nach Zugabe einer Lösung von 25 g Toluolsulfonsäure in 250 l Isopropanol wurde die Mischung 10,25 h auf Siedetemperatur erhitzt.

Nach Abkühlen auf Raumtemperatur wurde das Gelgranulat 5 h mit 5 l Aceton gespült (Ablaufdichte 0,79 g/l). Dann wurde das Gelgranulat analog Beispiel 1 getrocknet.

Es wurde ein $SiO_2$-Aerogelgranulat mit einer Schüttdichte von 0,146 g/cm$^3$ erhalten.

Beispiel 20

700 ml abgetropftes und salzfrei gewaschenes $SiO_2$-Hydrogelgranulat wurden analog Beispiel 9 mit Isopropanol gespült.

Das isopropanolhaltige Gelgranulat wurde zusammen mit weiteren 100 ml Isopropanol und 75 ml konzentrierter Schwefelsäure 7 h unter Rückfluß erhitzt.

Nach Abkühlen auf Raumtemperatur wurde das Gelgranulat solange mit Isopropanol gespült, bis die eingetragenen Sulfationen entfernt waren (negative Testreaktion mit Bariumchlorid). Anschließend wurde das im Gelgranulat enthaltene Isopropanol durch n-Pentan ersetzt. Dann wurde das Gelgranulat analog Beispiel 1, jedoch bei 200°C getrocknet.

Es wurde ein leicht gelb gefärbtes, aber transparentes $SiO_2$-Aerogelgranulat mit einer Schüttdichte von 0,141 g/cm$^3$, einer Wärmeleitfähigkeit von 0,0214 W/m • K und einer Transmission (600 nm) von 71 % erhalten.

**Patentansprüche**

1.  Verfahren zur Herstellung von anorganischen Aerogelgranulaten auf der Basis von Oxiden der Metalle Magnesium, Aluminium, Silicium, Zinn, Lanthan, Titan, Zirconium, Chrom und/oder Thorium durch Erzeugen eines Hydrogelgranulats über einen Sol/Gel-Prozeß, Ersetzen des im Hydrogelgranulat enthaltenen Wassers durch ein organisches Lösungsmittel und Trocknen des lösungsmittelfeuchten Gelgranulats, dadurch gekennzeichnet, daß man den Trocknungsschritt so vornimmt, daß man das lösungsmittelfeuchte Gelgranulat bei einem Druck, der unter dem überkritischen Druck des Lösungsmittels liegt, derart einer Umgebungstemperatur, die über der Siedetemperatur des Lösungsmittels liegt, aussetzt, daß das Lösungsmittel im Gelgranulat in wenigen Sekunden aufgeheizt wird und verdampft.

2.  Verfahren nach Anspruch 1, dadurch gekennzeichnet, daß man die Umgebungstemperatur so wählt, daß die Temperatur im Gelgranulat aufgrund des Phasenübergangs flüssig → gasförmig des Lösungsmittels unter der Pyrolysetemperatur des Lösungsmittels liegt.

3.  Verfahren nach Anspruch 1 oder 2, dadurch gekennzeichnet, daß man ein Hydrogelgranulat erzeugt, das im wesentlichen keine ionischen Bestandteile enthält, indem man die wäßrige Lösung eines hydrolysierbaren Salzes des Metalls, bei dem das Metall als Metallat vorliegt, zunächst mit Hilfe eines Ionenaustauschers von Fremdionen befreit und dann in einem Sol/Gel-Prozeß zum Hydrogelgranulat umsetzt oder indem man zunächst das Hydrogelgranulat erzeugt und dieses durch Waschen mit elektrolytfreiem Wasser von den Fremdionen befreit.

4.  Verfahren nach den Ansprüchen 1 bis 3, dadurch gekennzeichnet, daß man das Hydrogelgranulat direkt durch Versprühen des Sols in Form von Kugeln oder nachträglich durch mechanische Zerkleinerung des gebildeten Gelkörpers herstellt.

5.  Verfahren nach den Ansprüchen 1 bis 4, dadurch gekennzeichnet, daß man das im Hydrogelgranulat vorliegende Feststoffgerüst durch einen Umlösungsprozeß im Sinne einer Ostwaldreifung verstärkt.

6.  Verfahren nach den Ansprüchen 1 bis 5, dadurch gekennzeichnet, daß man das im Hydrogelgranulat enthaltene Wasser durch ein organisches Lösungsmittel ersetzt, das wasserlöslich ist und/oder mit Wasser ein Azeotrop bildet.

7.  Verfahren nach den Ansprüchen 1 bis 6, dadurch gekennzeichnet, daß man das im Hydrogelgranulat enthaltene Wasser durch Spülen des Hydrogelgranulats mit dem organischen Lösungsmittel oder durch azeotrope Destillation entfernt.

8.  Verfahren nach den Ansprüchen 1 bis 7, dadurch gekennzeichnet, daß man als organisches Lösungsmittel für den Austausch des Wassers $C_1$-$C_6$-Alkohole, aliphatische $C_1$-$C_6$-Carbonsäure-$C_1$-$C_8$-alkylester, Toluol, Aceton, Chloroform oder deren Mischungen einsetzt.

9.  Verfahren nach den Ansprüchen 1 bis 8, dadurch gekennzeichnet, daß man, wenn für den Austausch des Wassers ein höhersiedendes Lösungsmittel verwendet wurde, dieses vor dem Trocknungsschritt durch ein ≤ 100°C siedendes organisches Lösungsmittel mit hohem Dampfdruck ersetzt.

10. Verfahren nach Anspruch 9, dadurch gekennzeichnet, daß man als niedrigsiedendes Lösungsmittel $C_1$-$C_3$-Alko-

hole, Diethylether, Aceton, n-Pentan oder n-Hexan einsetzt.

11. Verfahren nach den Ansprüchen 1 bis 10, dadurch gekennzeichnet, daß man die nach der Entfernung des Wassers an der inneren Geloberfläche vorhandenen, an die Metallatome gebundenen OH-Gruppen mit einer chemischen Verbindung, die selbst nicht polymerisiert, umsetzt, um eine weitere Kondensation des Metalloxids bei der Trocknung zu verhindern.

12. Verfahren nach Anspruch 11, dadurch gekennzeichnet, daß man die an die Metallatome gebundenen OH-Gruppen mit $C_1$-$C_6$-Alkoholen verestert, mit Silanen der Formeln $R^1_{4-n}Si(OR^2)_n$ oder $R^1_{4-n}SiCl_n$, in denen n 1 bis 3 und $R^1$ und $R^2$ unabhängig voneinander $C_1$-$C_6$-Alkyl, Cyclohexyl oder Phenyl bedeuten, mit Hexamethyldisilazan oder Trimethylsilylacetamid silyliert oder zunächst mit Tetrachlorsilan und anschließend mit Metallorganylen, welche die obengenannten Reste $R^1$ enthalten, umsetzt.

13. Verfahren nach Anspruch 11 und 12, dadurch gekennzeichnet, daß man die an die Metallatome gebundenen OH-Gruppen mit $C_1$-$C_6$-Alkoholen verestert, indem man nach dem Austausch des Wassers durch den Alkohol ein Gemisch von alkoholhaltigem Gelgranulat und freiem Alkohol in Gegenwart einer Säure gegebenenfalls unter Abdestillieren des Reaktionswassers erhitzt.

14. Verfahren nach den Ansprüchen 1 bis 13, dadurch gekennzeichnet, daß man es zur Herstellung von $SiO_2$-Aerogel-granulaten anwendet.

## Claims

1. A process for preparing inorganic aerogel granules based on oxides of the metals magnesium, aluminum, silicon, tin, lanthanum, titanium, zirconium, chromium and/or thorium by producing hydrogel granules in a sol/gel process, replacing the water in the hydrogel granules by an organic solvent, and drying the solvent-moist gel granules, which comprises conducting the drying step by exposing the solvent-moist gel granules to an ambient temperature which is above the boiling temperature of the solvent and at a pressure which is below the supercritical pressure of the solvent in such a way that the solvent within the gel granules is heated up within a few seconds and evaporates.

2. A process as claimed in claim 1, wherein the ambient temperature is chosen such that the temperature in the gel granules owing to the transition of the solvent from the liquid to the gaseous phase lies below the pyrolysis temperature of the solvent.

3. A process as claimed in claim 1 or 2, wherein hydrogel granules are produced which comprise essentially no ionic constituents by first of all freeing the aqueous solution of a hydrolyzable salt of the metal, in which the metal is present as metallate, from foreign ions with the aid of an ion exchanger and then converting these gel granules to the hydrogel granules in a sol/gel process, or by first producing the hydrogel granules and then freeing them from the foreign ions by washing with electrolyte-free water.

4. A process as claimed in any of claims 1 to 3, wherein the hydrogel granules are produced directly by spraying the sol in the form of beads or subsequently by mechanical comminution of the resulting gel particles.

5. A process as claimed in any of claims 1 to 4, wherein the solid framework of the hydrogel granules is reinforced by a redissolution process in the manner of an Ostwald ripening.

6. A process as claimed in any of claims 1 to 5, wherein the water in the hydrogel granules is replaced by an organic solvent which is soluble in water and/or forms an azeotrope with water.

7. A process as claimed in any of claims 1 to 6, wherein the water in the hydrogel granules is removed by flushing the hydrogel granules with the organic solvent or by azeotropic distillation.

8. A process as claimed in any of claims 1 to 7, wherein the organic solvent employed to replace the water is a $C_1$-$C_6$ alcohol, an aliphatic $C_1$-$C_6$ carboxylic acid $C_1$-$C_8$-alkyl ester, toluene, acetone, chloroform or a mixture thereof.

9. A process as claimed in any of claims 1 to 8, wherein if a relatively high-boiling solvent is being used to replace the water it is replaced prior to the drying step by an organic solvent of high vapor pressure which boils at $\leq 100°C$.

**10.** A process as claimed in claim 9, wherein the low-boiling solvent employed is a $C_1$-$C_3$ alcohol, diethyl ether, acetone, n-pentane or n-hexane.

**11.** A process as claimed in any of claims 1 to 10, wherein the OH groups which are present following the removal of the water on the internal gel surface and are attached to the metal atoms are reacted with a chemical compound which does not itself undergo polymerization, in order to prevent further condensation of the metal oxide in the course of drying.

**12.** A process as claimed in claim 11, wherein the OH groups attached to the metal atoms are esterified with $C_1$-$C_6$ alcohols, silylated with silanes of the formula $R^1_{4-n}Si(OR^2)_n$ or $R^1_{4-n}SiCl_n$, where n is 1 to 3 and $R^1$ and $R^2$ independently of one another are $C_1$-$C_6$-alkyl, cyclohexyl or phenyl, with hexamethyldisilazane or with trimethylsilylacetamide, or are first of all reacted with tetrachlorosilane and then with metal organyls which contain the abovementioned radicals $R^1$.

**13.** A process as claimed in claims 11 and 12, wherein the OH groups attached to the metal atoms are esterified with $C_1$-$C_6$ alcohols by first replacing the water by the alcohol and then heating a mixture of the alcohol-containing gel granules and free alcohol in the presence of an acid, with or without distillative removal of the water of reaction.

**14.** A process as claimed in any of claims 1 to 13, which is applied to the preparation of $SiO_2$ aerogel granules.

**Revendications**

**1.** Procédé de préparation de granulés d'aérogels inorganiques, à base d'oxydes des métaux magnésium, aluminium, silicium, étain, lanthane, titane, zirconium, chrome et/ou thorium, par production d'un granulé d'hydrogel par l'intermédiaire d'un procédé sol/gel, remplacement de l'eau contenue dans le granulé d'hydrogel par un solvant organique, et séchage du granulé de gel humide du solvant, caractérisé en ce qu'on procède à l'étape de séchage en exposant le granulé de gel, humide du solvant, et sous une pression qui est inférieure à la pression supercritique du solvant, à une température ambiante supérieure à la température d'ébullition du solvant, de telle sorte que le solvant soit chauffé en quelques secondes dans le granulé de gel, et s'évapore.

**2.** Procédé selon la revendication 1, caractérisé en ce qu'on choisit la température ambiante de façon que la température dans le granulé de gel soit, en raison de la transition de phase liquide → gaz du solvant, inférieure à la température de pyrolyse du solvant.

**3.** Procédé selon la revendication 1 ou 2, caractérisé en ce qu'on produit un granulé d'hydrogel qui pour l'essentiel ne contient pas de constituants ioniques, en débarrassant d'abord des ions étrangers, à l'aide d'un échangeur d'ions, la solution aqueuse d'un sel hydrolysable du métal, où le métal se présente sous forme d'un métallate, puis en la faisant réagir, dans un procédé sol/gel, pour obtenir un granulat d'hydrogel, ou encore en produisant d'abord le granulat d'hydrogel, et en débarrassant ce dernier des ions étrangers, par lavage avec de l'eau exempte d'électrolyte.

**4.** Procédé selon les revendications 1 à 3, caractérisé en ce qu'on prépare le granulé d'hydrogel directement par pulvérisation du sol sous forme de sphères, ou après-coup par broyage mécanique du corps de gel ainsi formé.

**5.** Procédé selon les revendications 1 à 4, caractérisé en ce qu'on renforce le squelette solide présent dans le granulé d'hydrogel par une opération de recristallisation au sens d'une maturation d'Ostwald.

**6.** Procédé selon les revendications 1 à 5, caractérisé en ce qu'on remplace l'eau contenue dans le granulé d'hydrogel par un solvant organique qui est soluble dans l'eau et/ou forme un azéotrope avec l'eau.

**7.** Procédé selon les revendications 1 à 6, caractérisé en ce qu'on élimine l'eau contenue dans le granulé d'hydrogel, par rinçage du granulé d'hydrogel avec le solvant organique, ou par distillation azéotrope.

**8.** Procédé selon les revendications 1 à 7, caractérisé en ce qu'on utilise en tant que solvant organique pour le remplacement de l'eau des alcools en $C_1$-$C_6$, des esters alkyliques en $C_1$-$C_8$ d'acides carboxyliques aliphatiques en $C_1$-$C_6$, le toluène, l'acétone, le chloroforme ou leurs mélanges.

**9.** Procédé selon les revendications 1 à 8, caractérisé en ce que, quand pour remplacer l'eau on utilise un solvant à point d'ébullition plus élevé, on remplace ce dernier, avant l'étape de séchage, par un solvant organique ayant un point d'ébullition ≤ 100°C et présentant une grande pression de vapeur.

10. Procédé selon la revendication 9, caractérisé en ce qu'on utilise en tant que solvant à bas point d'ébullition des alcools en $C_1$-$C_3$, du diéthyléther, l'acétone, le n-pentane ou le n-hexane.

11. Procédé selon les revendications 1 à 10, caractérisé en ce qu'on fait réagir les groupes OH fixés aux atomes métalliques, présents sur la surface interne du gel après élimination de l'eau, avec un composé chimique qui ne polymérise pas par lui-même, pour empêcher une condensation plus poussée de l'oxyde métallique lors du séchage.

12. Procédé selon la revendication 11, caractérisé en ce qu'on estérifie les groupes OH fixés aux atomes métalliques avec des alcools en $C_1$-$C_6$; on les silyle avec des silanes de formules $R^1_{4-n}Si(OR^2)_n$ ou $R^1_{4-n}SiCl_n$ dans lesquelles n vaut 1 à 3 et $R^1$ et $R^2$ représentent chacun indépendamment de l'autre un radical alkyle en $C_1$-$C_6$ ou les groupes cyclohexyle ou phényle, avec de l'hexaméthyldisilazane ou du triméthylsilylacétamide ; ou encore on les fait réagir d'abord avec du tétrachlorosilane, puis avec des composés organométalliques qui contiennent les radicaux $R^1$ mentionnés ci-dessus.

13. Procédé selon les revendications 11 et 12, caractérisé en ce qu'on estérifie avec des alcools en $C_1$-$C_6$ les groupes OH fixés aux atomes métalliques, en chauffant, après remplacement de l'eau par l'alcool, un mélange d'un granulé de gel contenant un alcool et d'alcool libre, en présence d'un acide, et éventuellement en chassant par distillation l'eau de réaction.

14. Procédé selon les revendications 1 à 13, caractérisé en ce qu'on l'utilise pour préparer des granulés d'aérogel de $SiO_2$.

# FIG.1

# FIG.2

# FIG.3